Europäisches Patentamt

European Patent Office

Office européen des brevets

(11) Veröffentlichungsnummer: **0 022 949**
**A2**

(12) # EUROPÄISCHE PATENTANMELDUNG

(21) Anmeldenummer: 80103666.6

(51) Int. Cl.³: **G 01 T 1/15**

(22) Anmeldetag: **27.06.80**

(30) Priorität: **03.07.79 DE 2926902**

(43) Veröffentlichungstag der Anmeldung:
**28.01.81 Patentblatt 81/4**

(84) Benannte Vertragsstaaten:
**DE FR GB SE**

(71) Anmelder: **SIEMENS AKTIENGESELLSCHAFT Berlin
und München
Postfach 22 02 61
D-8000 München 22(DE)**

(72) Erfinder: **Pashby, Charles Augustine
3030 Oberon Drive
Walnut Creek California 94596(US)**

(54) **Dosismesseinrichtung.**

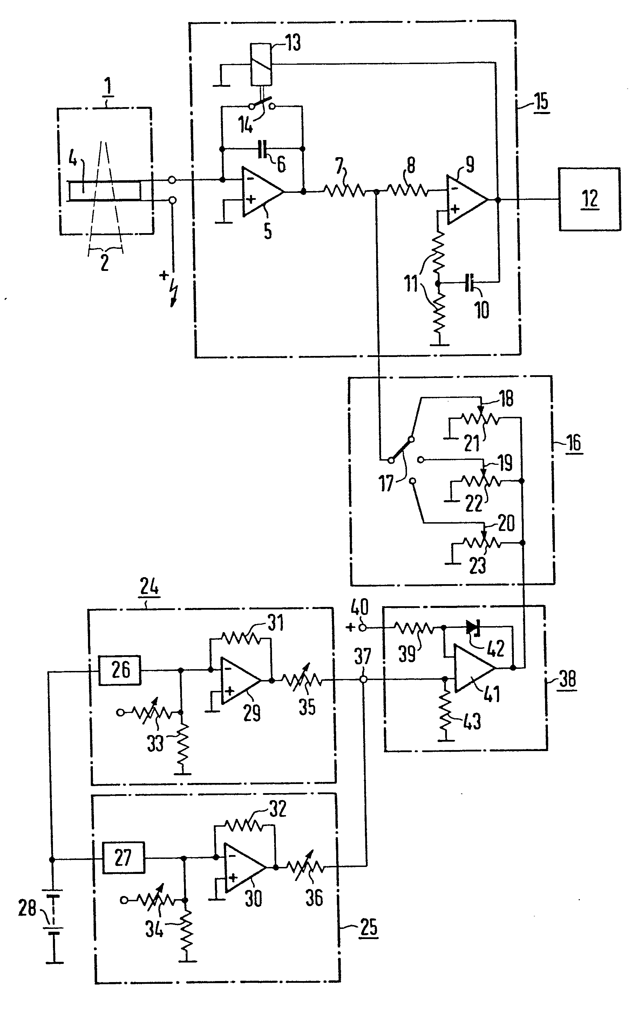

(57) Die Erfindung bezieht sich auf eine Dosismeßeinrichtung mit einem Strahlendetektor (4), einem Verstärker (5) und einer dem Verstärker zugeordneten Integrationsstufe (6) für eine der vom Strahlendetektor gemessenen Strahlendosis proportionale Größe. Die Integrationsstufe (6) wird bei einem voreinstellbaren aufintegrierten Wert durch ein Steuerelement (13, 14) zurückgestellt. Die Integrationsschritte werden von einem Zähler (12) gezählt. Bei solchen Dosismeßeinrichtungen soll die Abhängigkeit von Umgebungseinflüssen, insbesondere von Druck und Temperatur, kompensiert werden. Zu diesem Zweck sieht die Erfindung vor, daß mindestens ein Meßwandler (26, 27) den am Strahlendetektor (4) herrschenden Umgebungseinflüssen ausgesetzt ist und die Ausgänge der Meßwandler über je einen, der Einflußnahme der jeweiligen Meßgröße auf die angezeigte Dosis angepaßten Verstärker (29, 30, 31, 32, 35, 36) dem Eingang des Steuerelementes (9, 10, 11, 13, 14) für die Rückstellung der Integrationsstufe (6) zugeordnet sind. (Fig. 1)

EP 0 022 949 A2

./...

SIEMENS AKTIENGESELLSCHAFT   ·Unser Zeichen
Berlin und München        VPA 79 P 5902 **EUR**

Dosismeßeinrichtung

Die Erfindung bezieht sich auf eine Dosismeßeinrichtung, vorzugsweise für die Verwendung in der Strahlentherapie, mit einem Strahlendetektor, einem Verstärker und einer dem Verstärker zugeordneten Integrationsstufe für eine der vom Strahlendetektor gemessenen Strahlendosis proportionalen Größe, einem die Integrationsstufe bei einem voreinstellbaren aufintegrierten Wert zurückstellenden Steuerelement sowie einem die Zahl der einzelnen Integrationsschritte zählenden Zähler.

Es ist bereits ein Strahlentherapiegerät bekannt, bei dem eine der Strahlung ausgesetzte Ionisationskammer an einen Verstärker angeschlossen ist, der mit einem Kondensator als Integrationsstufe verbunden ist. Bei einer vorgegebenen Spannung des Kondensators wird dieser jeweils kurzseitig kurzgeschlossen, so daß der Integrationsvorgang von neuem beginnen kann. Die Zahl der einzelnen Integrationsschritte ist proportional der dem Kondensator zugeführten elektrischen Ladung

Stk 5 Ler / 3.5.1979

und der von der Ionisationskammer gemessenen Dosis. Die Integrationsschritte werden in einem Zähler gezählt, der in Dosiswerten geeicht ist. Bei dieser Dosismeßeinrichtung wird eine gewisse Abhängigkeit der Meßwerte von den jeweils herrschenden klimatischen Verhältnissen beobachtet.

Der Erfindung liegt die Aufgabe zugrunde, die Meßgenauigkeit der Dosismeßeinrichtung zu erhöhen und Schwankungen der Meßgenauigkeit, die durch Umwelteinflüsse bedingt sind, zu eliminieren.

Bei einer Dosismeßeinrichtung der eingangs genannten Art ist daher erfindungsgemäß mindestens ein Meßwandler den am Strahlendetektor herrschenden, dessen Meßeigenschaften beeinflussenden Umwelteinflüssen ausgesetzt und sind die Ausgänge der Meßwandler über je einen, der Einflußnahme der jeweiligen Meßgröße auf die angezeigte Dosis angepaßten Verstärker dem Eingang des Steuerelements für die Rückstellung der Integrationsstufe im Sinne einer Beeinflussung der Ansprechschwelle zugeordnet. Diese Schaltungsanordnung erlaubt es, die von dem oder den Meßwandler(n) gemessenen klimatischen Bedingungen in dem Maße, in dem sie das Meßergebnis der Dosismeßeinrichtung beeinflussen, zu berücksichtigen. Dadurch, daß die von den Meßwandlern gemessenen Werte dem Steuerelement für die Rückstellung des Integrationsgliedes zugeführt werden, wird der die Rückstellung auslösende Integrationswert und damit die vom Strahlendetektor gemessene Dosis, die jedem Integrationsvorgang entspricht, beeinflußt. Der Vorteil dieser Art der Beeinflussung des Meßergebnisses liegt darin begründet, daß die weitere, meist digitale Meßwertverarbeitung davon nicht berührt wird. Dabei ist es von Wichtigkeit, daß die recht unterschiedliche Stärke, mit der die einzelnen Umwelteinflüsse die Dosismessung beeinflussen, berücksichtigt
werden kann.

Die unterschiedlichen Steilheiten der Kennlinien der
verschiedenen Meßwandler lassen sich gut berücksichtigen, wenn der Verstärkungsfaktor des Verstärkers in
vorteilhafter Weiterbildung der Erfindung über einen
Rückkopplungswiderstand an die Steilheit der Kennlinie
des Meßwandlers anpaßbar ist. Hierbei erlaubt es der
Rückkopplungswiderstand, die Steilheit der den jeweiligen Meßwandler beinhaltenden Kompensationsschaltung
an die Steilheit anzupassen, mit der die Änderung der
entsprechenden Meßgröße, wie z.B. Temperatur oder
Druck, das Meßergebnis des Strahlendetektors beeinflußt.

In zweckmäßiger Weiterbildung der Erfindung kann der
Eingang des Verstärkers an einen Spannungsteiler angeschlossen sein. Dies ermöglicht es, den Nulldurchgang der Kennlinie der den jeweiligen Meßwandler beinhaltenden Kompensationsschaltung so zu legen, daß
bei normalen Werten der Umwelteinflüsse keine Korrektur der Dosismessung erfolgt. Hierdurch wird die Genauigkeit beim Ausgleich von Umgebungseinflüssen erhöht, weil die Stellweite der Kompensationsschaltung
nach jeder Seite hin verringert und zudem auf jene
Werte beschränkt ist, die die Abweichungen von den normalen Betriebswerten darstellen und daher weniger
häufig vorkommen.

In vorteilhafter Ausgestaltung der Erfindung können
die den einzelnen Meßwandlern zugeordneten Verstärker
über einen Serienwiderstand an den Eingang eines gemeinsamen Referenzspannungsverstärkers angeschlossen

sein, dessen Ausgang mit dem Eingang des dem Strahlendetektor zugeordneten Verstärkers verbunden ist. Hierdurch läßt sich in einfacher Weise die Gesamtimpedanz der einzelnen Kompensationsschaltungen so aneinander anpassen, daß sie gemeinsam eine richtige Beeinflussung des dem Strahlendetektor zugeordneten Verstärkers bewirken.

Weitere Einzelheiten der Erfindung werden anhand eines in der Figur dargestellten Ausführungsbeispiels näher erläutert.

Die Figur zeigt eine Gesamtansicht der Schaltungsanordnung für die Kompensation der Druck- und Temperaturabhängigkeit eines Strahlendetektors.

In der Figur erkennt man einen in ein Strahlentherapiegerät 1 eingebauten, dessen Strahlung 2 ausgesetzten und an eine Hochspannungsquelle 3 angeschlossenen Strahlendetektor 4. Dieser Strahlendetektor, im vorliegenden Fall eine Ionisationskammer, ist an einen ersten Operationsverstärker 5 angeschlossen. Der Eingang und der Ausgang des ersten Operationsverstärkers 5 sind durch einen Kondensator 6 überbrückt. Der Ausgang des ersten Operationsverstärkers ist über zwei Widerstände 7, 8 an den Eingang eines zweiten Operationsverstärkers 9 geschaltet. Der Ausgang dieses zweiten Operationsverstärkers ist über einen Rückkopplungskondensator 10 mit einem Basiswiderstand 11 verbunden, so daß eine positive Rückkopplung stattfindet. Außerdem ist der Ausgang des zweiten Operationsverstärkers 9 an einen Impulszähler 12 und an ein Relais 13 angeschlossen. Der im Erregungsfall geschlossene Arbeitskontakt 14 dieses Relais ist parallel zum Kondensator 6 geschaltet.

Beim Betrieb der Ionisationskammer 4 führt die allmähliche Aufladung des parallel zum ersten Operationsverstärker 5 geschalteten Kondensators 6 zu einem Anwachsen der Spannung am Ausgang dieses ersten und somit auch am Eingang des zweiten Operationsverstärkers 9. Von einer bestimmten Spannung an wird der zweite Operationsverstärker seine Spannung infolge der positiven Rückkopplung sehr rasch ändern und zu einem Erregen des Relais 13 führen. Das Relais zieht an und entlädt über seinen Arbeitskontakt 14 den parallel zum ersten Operationsverstärker 5 geschalteten Kondensator 6. Dadurch nimmt der zweite Operationsverstärker 9 wieder seinen ursprünglichen Zustand ein. Das Relais 13 wird wieder stromlos und öffnet seinen Arbeitskontakt 14. Die Aufladung des Kondensators 6 beginnt von vorne. Von dem am Ausgang des zweiten Operationsverstärkers 9 angeschlossenen Impulszähler 12 wird jeder dieser Impulse gezählt. Jedem dieser Impulse entspricht eine bestimmte Ladung des Kondensators 6 und infolge der Linearität der Kennlinie des ersten Operationsverstärkers auch eine bestimmte, von der Ionisationskammer 4 gemessene Dosis. Daher ist der Ausgang des Impulszählers 12 in Dosiseinheiten geeicht.

Die unterschiedliche Empfindlichkeit der Ionisationskammer 4 für Strahlung 2 unterschiedlicher Qualität, wie z.B. Röntgenstrahlung und Elektronenstrahlung unterschiedlicher Energie, kann bei dieser bekannten Dosismeßeinrichtung 15 dadurch berücksichtigt werden, daß der Eingangsspannung des zweiten Operationsverstärkers 9 über einen Bereichsumschalter 16 eine voreinstellbare Spannung überlagert wird. Ein solcher Bereichsumschalter besteht aus einem Mehrstufenschalter 17 mit je einer Schaltstufe für die einzelnen, zu messenden Strahlenqualitäten, wobei in jeder Schaltstufe der Mittelabgriff 18, 19, 20 je eines einer bestimmten Strahlenqualität zugeordneten voreingestellten Potentiometers 21, 22, 23 eingeschaltet wird. Dies führt dazu, daß der zweite Operationsverstärker 9 entweder bei einer niedrigeren oder auch höheren Spannung des parallel zum ersten Operationsverstärker 5 geschalteten Kondensators 6 anspricht und damit jeder der gezählten Impulse einer entsprechend anderen Ladung des Kondensators und somit auch einer anderen, von der Ionisationskammer 4 gemessenen Dosis entspricht.

Im unteren Teil der Figur sind zwei gleichartig aufgebaute Kompensationsschaltungen 24, 25 zu erkennen. Die eine Kompensationsschaltung 24 enthält einen Temperaturmeßwandler 26 und die andere einen Druckmeßwandler 27. Beide Meßwandler sind mit einer Spannungsquelle 28 verbunden und an je einen Operationsverstärker 29, 30 angeschlossen. Der Verstärkungsfaktor eines jeden Operationsverstärkers 29, 30 ist über einen zwischen Eingang und Ausgang geschalteten Rückkopplungswiderstand 31, 32 an den jeweiligen Meßwandler 26, 27 angepaßt. Der Eingang jedes der beiden Operationsverstärker 29, 30 ist außerdem an ein Potentiometer 33, 34 angeschlossen. Jedem Operationsverstärker 29, 30 ist ein Serienwiderstand 35, 36 zugeordnet. Mit diesen Serienwiderständen sind die beiden Kompensationsschaltungen 24, 25 gemeinsam an den Eingang 37 eines Referenzspannungsverstärkers 38 angeschlossen. Dieser ist über einen Arbeitswiderstand 39 an eine konstante Spannungsquelle 40 angeschlossen und speist seinerseits den Bereichsumschalter 16. Der Referenzspannungsverstärker 38 besteht aus einem Operationsverstärker 41, dessen an die konstante Spannungsquelle 40 angeschlossener Eingang über eine

0022949

Zenerdiode 42 mit seinem Ausgang verbunden ist. Der andere Eingang des Operationsverstärkers 31 liegt über einem weiteren Basiswiderstand 43 an Masse.

Durch entsprechende Wahl der den beiden Meßwandlern 26, 27 zugeschalteten Serienwiderstände 35, 36 lassen sich deren Impedanz und die effektive Steilheit der Kennlinien der Kompensationsschaltungen aneinander anpassen. Durch das bei beiden Kompensationsschaltungen dem Eingang des Operationsverstärkers 29, 30 vorgeschaltete Potentiometer 33, 34 kann der Nulldurchgang der jeweiligen Kompensationsschaltung so verschoben werden, daß bei normalen Betriebsbedingungen, im vorliegenden Fall bei 25° C und 760 mm Hg, keine Beeinflussung der Meßwerte der Ionisationskammer 4 durch die Kompensationsschaltungen 24, 25 erfolgen. Dadurch wird der korrigierende Einfluß der Kompensationsschaltungen eingeschränkt und außerdem auf Arbeitsbereiche beschränkt, die seltener erreicht werden. Durch die Zenerdiode 42 wird dem Ausgang des Referenzspannungsverstärkers 30 ein bestimmtes Potential, bezogen auf dessen Spannungsquelle 40, aufgeprägt. Die Ausgangsspannungen der Kompensationsschaltungen 24, 25 verändern dieses aufgeprägte Potential in Verbindung mit dem Arbeitswiderstand 39 geringfügig. Diese Änderung wirkt sich auf alle Werte am Ausgang der Bereichsumschaltung 16 gleichermaßen aus und führt am zweiten Operationsverstärker 9 zu einer Verschiebung der Ansprechschwelle, bei der der Kondensator 6 des ersten Operationsverstärkers 5 kurzgeschlossen wird.

– 1 –    VPA 79 P 5902 **EUR**

Patentansprüche

1. Dosismeßeinrichtung, vorzugsweise für die Verwendung in der Strahlentherapie, mit einem Strahlendetektor, einem Verstärker und einer dem Verstärker zugeordneten Integrationsstufe für eine der vom Strahlendetektor gemessenen Strahlendosis proportionalen Größe, einem die Integrationsstufe bei einem voreinstellbaren aufintegrierten Wert zurückstellenden Steuerelement sowie einem die Zahl der einzelnen Integrationsschritte zählenden Zähler, d a d u r c h g e k e n n z e i c h n e t , daß mindestens ein Meßwandler (26, 27) den am Strahlendetektor (4) herrschenden, dessen Meßeigenschaften beeinflussenden Umgebungseinflüssen ausgesetzt ist und die Ausgänge der Meßwandler über je einen, der Einflußnahme der jeweiligen Meßgröße auf die angezeigte Dosis angepaßten Verstärker (29, 30, 31, 32, 35, 36) dem Eingang des Steuerelements (9, 10, 11, 13) für die Rückstellung der Integrationsstufe (6) im Sinne einer Beeinflussung der Ansprechschwelle zugeordnet sind.

2. Dosismeßeinrichtung nach Anspruch 1, d a d u r c h g e k e n n z e i c h n e t , daß der Verstärkungsfaktor des Verstärkers (29, 30) über einen Rückkopplungswiderstand (31, 32) an die Steilheit der Kennlinie des Meßwandlers (26, 27) anpaßbar ist.

3. Dosismeßeinrichtung nach Anspruch 2, d a d u r c h g e k e n n z e i c h n e t , daß der Eingang des Verstärkers (29, 30) an einen Spannungsteiler (33, 34) angeschlossen ist.

4. Dosismeßeinrichtung nach Anspruch 1, d a - d u r c h g e k e n n z e i c h n e t , daß die den einzelnen Meßwandlern (26, 27) zugeordneten Verstärker (29, 30) über je einen Serienwiderstand (35, 36) an den Eingang eines gemeinsamen Referenzspannungsverstärkers (38) angeschlossen sind, dessen Ausgang mit dem Eingang des dem Strahlendetektor (4) zugeordneten Verstärkers (9) verbunden ist.

5. Dosismeßeinrichtung nach Anspruch 1, d a - d u r c h g e k e n n z e i c h n e t , daß eine Ionisationskammer als Strahlendetektor (4) verwendet ist.

6. Dosismeßeinrichtung nach Anspruch 1, d a - d u r c h gekennzeichnet , daß ein außerhalb des Strahlenfeldes (2) des Strahlentherapiegerätes (1), jedoch in unmittelbarer Nachbarschaft des Strahlendetektors (4) angeordneter Temperaturmeßwandler (26) verwendet ist.

7. Dosismeßeinrichtung nach Anspruch 1, d a - d u r c h g e k e n n z e i c h n e t , daß ein am Strahlentherapiegerät (1) angebauter Druckmeßwandler (27) verwendet ist.